(19) Europäisches Patentamt
European Patent Office
Office européen des brevets

(11) **EP 0 649 674 B1**

(12) **FASCICULE DE BREVET EUROPEEN**

(45) Date de publication et mention
de la délivrance du brevet:
**16.08.2000 Bulletin 2000/33**

(51) Int. Cl.[7]: **B01D 53/50**, C01C 1/244

(21) Numéro de dépôt: **94402389.4**

(22) Date de dépôt: **24.10.1994**

(54) **Procédé et installation de génération de chaleur avec régénération de l'absorbant et obtention d'un produit fertilisant**

Verfahren und Vorrichtung zur Wärmeerzeugung mit Adsorbensregenierung und Düngemittelherstellung

Heat generation process and installation with adsorbent regeneration producing a fertilizer

(84) Etats contractants désignés:
**BE DE GB IT NL**

(30) Priorité: **26.10.1993 FR 9312905**

(43) Date de publication de la demande:
**26.04.1995 Bulletin 1995/17**

(73) Titulaire:
**INSTITUT FRANCAIS DU PETROLE**
**92502 Rueil-Malmaison (FR)**

(72) Inventeur: **Martin, Gérard**
**F-92500 Rueil-Malmaison (FR)**

(56) Documents cités:
**EP-A- 0 379 307**     **DE-A- 3 217 394**
**FR-A- 2 156 953**     **GB-A- 2 068 919**

**Description**

La présente invention concerne le domaine des générateurs thermiques comportant des moyens de traitement des fumées de combustion.

Un problème de pollution se pose dès lors que des générateurs thermiques fonctionnent avec des combustibles à haute teneur en soufre et en azote, puisqu'une telle combustion génère notamment des émissions élevées d'oxydes de soufre, d'oxydes d'azote et de composés combustibles imbrûlés.

Des réglementations de plus en plus sévères limitant les émissions précitées, l'emploi de combustibles en haute teneur en soufre devient quasi-impossible.

Des solutions technologiques ont déjà été proposées afin de résoudre ce problème.

Ainsi, selon le brevet français FR-2.609.150, il est possible de réduire les émissions d'oxydes de soufre et particulièrement celles de dioxyde de soufre provenant d'un générateur de chaleur acceptant des combustibles à haute teneur en soufre. Pour ce faire, on réalise la combinaison de trois éléments principaux, formant un ensemble compact, à savoir, une chambre de combustion de préférence à parois froides, une chaudière de récupération captant la chaleur sensible des gaz de combustion et un lit circulant intermédiaire sans surface d'échange interne notable et dont la fonction est de désulfurer les gaz transitant entre le foyer amont et l'échangeur aval.

Une amélioration de cette installation, au plan du rendement de désulfuration, est proposé dans le brevet français FR-2.636.720.

Dans ce dernier type de générateurs thermiques, on injecte des absorbants calciques pulvérulents sous forme de suspension ou sous forme de poudre sèche afin de capter les oxydes de soufre. L'opération est réalisée aux environs de 1000°C.

Un problème important rencontré avec de telles chaudières concerne la production de quantités non négligeables d'absorbants usés, essentiellement de chaux vive et de sulfate de calcium anhydre, dont la mise en décharge se révèle de plus en plus difficile, onéreuse et mal perçue par le public.

Pour résoudre ce problème, une solution connue consiste, comme divulgué dans la demande de brevet française FR-2.671.855, à utiliser des absorbants dits régénérables de type magnésien, qui permettent donc de limiter considérablement les rejets solides finaux, tout en assurant un traitement très correct des fumées.

Selon cet art antérieur, la régénération de l'absorbant usé libère le soufre sous forme de $SO_2$ et de $H_2S$ concentrés. Ces espèces chimiques sont recueillies dans une trémie de stockage puis elles peuvent être envoyées par exemple dans des unités Claus afin d'y être converties en soufre élémentaire. Cependant. ces "post-traitements" se sont avérés coûteux donc décourageants pour l'utilisateur de cette technologie.

La présente invention propose une nouvelle façon de traiter les fumées de combustion d'un générateur thermique, qui opère une régénération de l'absorbant utilisé, d'où un volume réduit de produit finalement rejeté avec une consommation minimale d'absorbant.

En outre, l'absorbant utilise étant non plus un absorbant de type magnésien, mais de type calcique, la mise en oeuvre de invention est donc peu onéreuse puisque la chaux ou les calcaires naturels sont en eux-mêmes des produits très bon marché.

Le document DE 32 17 394 décrit une désulfuration à l'aide de produit calcique mais pas les éléments caractéristiques des revendications 1 et 5 de la présente demande. De même pour le document GB 2 068 919.

Par ailleurs, la présente invention permet une valorisation du soufre capté dans les fumées, et notamment une valorisation dans le domaine des engrais puisque lors de la régénération. le produit soufré obtenu est un fertilisant ou peut entrer dans la composition de certains fertilisants.

Cette valorisation contribue à rentabiliser l'utilisation de l'objet de la présente invention.

En outre, la nouvelle technologie, objet de la présente demande, est proche du concept "zéro déchet solide" qui comme on peut facilement le comprendre, consiste à valoriser tout produit de la combustion afin de l'exploiter totalement et au moindre coût.

Les objectifs précités sont atteints selon la présente invention qui a pour objet une installation génératrice de chaleur comprenant un générateur thermique ayant notamment une zone de désulfuration et de dénitrification, un moyen de dépoussiérage, une cheminée d'évacuation des effluents issus du moyen de dépoussiérage, un moyen de régénération de l'absorbant usé, un moyen de filtrage de l'absorbant régénéré, l'absorbant utilisé est un produit calcique.

Selon l'invention, l'installation comporte en outre des moyens de préparation d'une solution destinée à la régénération et le produit soufré issu de moyen de filtrage est un produit fertilisant.

Plus précisément, les moyens de préparation de la solution consiste en un échangeur qui met en contact une solution ammoniacale provenant d'un moyen de stockage avec une partie des gaz issus du moyen de dépoussiérage, et dans lequel est ajouté du gaz carbonique stocké dans un moyen, la solution ainsi préparée étant une solution concentrée en carbonate d'ammonium.

Un échangeur de chaleur coopére avec le contacteur.

De façon préférentielle, le générateur thermique peut comprendre une chambre de combustion, une chambre de désulfuration et de dénitrification, un échangeur par convection, la chambre de désulfuration comportant des lignes d'alimentation en absorbant régénéré et non régénéré et en ammoniaque.

En outre, les moyens de régénération de l'absorbant peuvent consister en au moins un réacteur recevant la solution concentrée en carbonate d'ammonium et une partie de l'absorbant calcique usé provenant du dépoussiéreur. Ledit réacteur peut être équipé de moyens de brassage du mélange et éventuellement de moyens de prélèvement de chaleur.

Par ailleurs, l'invention concerne un procédé comportant notamment les étapes consistant à :

- réaliser une combustion dans un générateur thermique,
- désulfurer et dénitrifier les effluents issus de la combustion à l'intérieur dudit générateur,
- utiliser des absorbants calciques 7
- réaliser un échange de chaleur avec les effluents traités,
- dépoussiérer les effluents traités,
- récupérer l'absorbant, en recycler une partie vers la zone de désulfuration/dénitrification, en envoyer une autre partie vers une zone de régénération,
- évacuer à l'atmosphère les fumées dépoussiérées,
- régénérer l'absorbant,
- à filtrer le mélange issu de ladite régénération, le produit soufré obtenu étant un produit fertilisant,
- recycler l'absorbant régénéré vers la zone de désulfuration et dénitrification,
- évacuer les fumées issues de la régénération.
- à utiliser des absorbants calciques,

Conformément à l'invention, le procédé de génération de chaleur consiste en outre :

- (i) à préparer, préalablement à l'étape de régénération, une solution de carbonate d'ammonium à partir d'ammoniaque et de gaz carbonique provenant en partie des fumées issues du générateur thermique et en partie dune capacité spécifique et réaliser simultanément un échange de chaleur,
- à mélanger pendant l'étape de régénération ladite solution avec l'absorbant calcique à régénérer dans au moins un réacteur,
- à récupérer d'une part l'absorbant calcique régénéré avant son recyclage vers la zone de désulfuration/dénitrification et d'autre part une solution de sulfate d'ammonium.

Selon une autre de ses caractéristiques, le procédé peut en outre consister à réaliser un échange de chaleur simultanément à la régénération d'absorbant.

Préférentiellement, la régénération peut être réalisée successivement dans plusieurs réacteurs.

Alors, des apports complémentaires de carbonate de calcium et/ou de gaz carbonique peuvent être réalisés au niveau des différents réacteurs.

L'étape finale de filtration peut être réalisée avec une contre-circulation d'eau.

Avantageusement, après récupération et avant recyclage, l'absorbant régénéré peut être soumis à un traitement additionnel.

Le traitement additionnel peut consister en un séchage de l'absorbant régénéré dans le cas d'une utilisation sous forme sèche.

Dans le cas d'une utilisation sous forme de suspension, le traitement additionnel pourra consister en un ajustement de la teneur en eau et/ou en l'ajout additionnel d'agents stabilisants.

D'autres avantages, détails et caractéristiques de l'invention apparaîtront mieux à la lecture de la description qui va suivre, faite à titre illustratif et nullement limitatif, en référence à l'unique planche annexée sur laquelle figure de façon schématique un mode de réalisation d'une installation selon l'invention.

Certains éléments de base de cette installation étant connus de l'homme de métier, ils ne seront pas décrits en détail dans la description qui suit. Seuls leur fonction spécifique et/ou leur relation avec les autres éléments feront partie de la description ci-après.

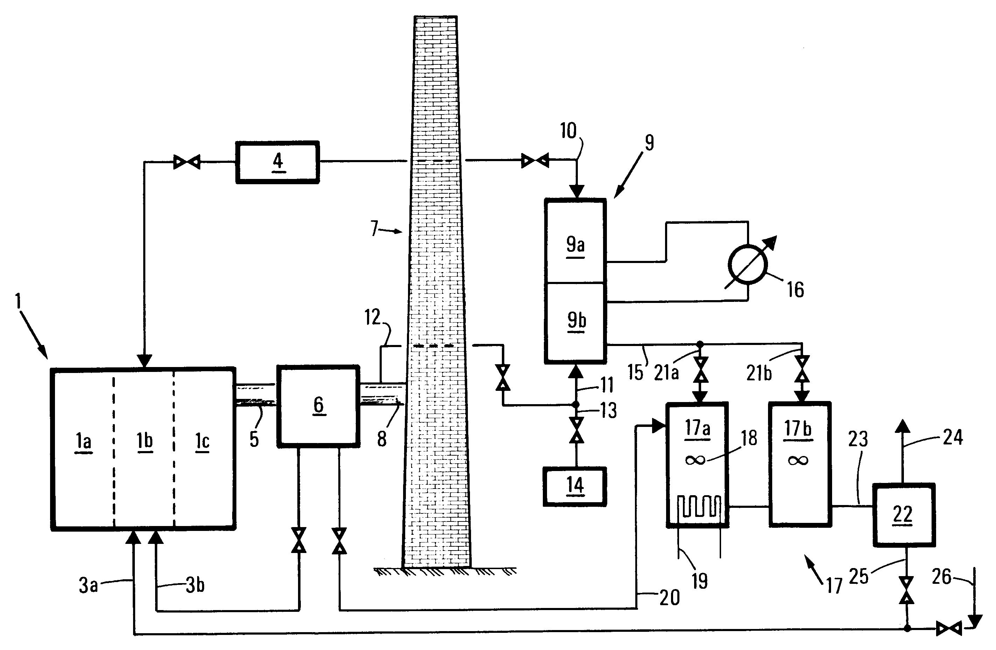

Ainsi, l'installation représentée comprend un générateur thermique 1, lequel est subdivisé en trois éléments qui, dans le sens d'écoulement des gaz, sont : la chambre de combustion 1-a avec ses équipements de chauffe non représentés sur la figure, une chambre de désulfuration et de dénitrification intermédiaire 1-b et une zone d'échange par convection 1-c. La chambre de désulfuration et de dénitrification 1-b est alimentée en ammoniaque issue d'une capacité de stockage 4 par une ligne 2, en absorbant recyclé non régénéré par une ligne 3-a et en absorbant régénéré par une ligne 3-b. Les effluents de combustion sortent du générateur thermique 1 par une ligne 5 et sont dirigés vers un dispositif de dépoussiérage 6. Les fumées débarrassées de l'absorbant sont ensuite dirigées vers une cheminée 7, via une ligne de transfert 8.

L'installation selon l'invention comporte en outre un contacteur gaz-liquide 9 qui peut être une colonne à garnissage par exemple. Ce contacteur 9 est alimenté à sa partie supérieure par une solution ammoniacale issue d'une capacité de stockage 4, via une ligne 10, et à sa partie inférieure par un gaz contenant du $CO_2$ via la ligne 11. La ligne 11 est préférentiellement alimentée à la fois par un prélèvement réalisé sur la conduite de fumées principale 8 via une dérivation 12 et par une ligne 13 qui est connectée à un générateur de $CO_2$ ou une capacité de stockage de $CO_2$ 14.

La solution ammoniacale percole le long du contacteur 9 et s'enrichit progressivement en carbonate d'ammonium. Une solution concentrée en carbonate d'ammonium est extraite à la base du contacteur 9 par une ligne 15.

Le contacteur 9 est subdivisé en un certain nombre de sous-ensembles 9-a, 9-b, ... entre lesquels il peut être procédé à une extraction et à un refroidissement de la solution par l'intermédiaire d'un échangeur de chaleur 16.

La régénération de l'absorbant est réalisée dans l'ensemble de réacteurs successifs 17-a, 17-b, ... Ces réacteurs peuvent être munis de moyens de brassage et de mélange 18. Certains d'entre eux, en particulier les premiers, peuvent préférentiellement être équipés de moyens d'extraction de chaleur 19 constitués de faisceaux de tubes immergés dans la phase liquide.

L'absorbant usé est amené dans l'un au moins desdits réacteurs 17-a par une ligne 20 tandis que la solution de carbonate d'ammonium arrive dans le premier réacteur 17-a par la ligne 21-a.

Des apports complémentaires de carbonate d'ammonium dans les réacteurs suivants 17-b, etc ... sont possibles via les lignes 21-b, etc ... ceci afin d'accroître la conversion de l'anhydrite en sulfate d'ammonium. La solution de sulfate d'ammonium et de carbonate de calcium résiduel est dirigée vers un filtre 22 par une ligne 23.

Par une ligne 24, sort du filtre 22 une solution de sulfate d'ammonium débarrassée de la presque totalité de ses particules de carbonate de calcium, solution qui peut ensuite être envoyée vers un décomposeur (non représenté) où l'on réduira encore la teneur résiduelle en carbonate de calcium, puis ensuite vers un évaporateur - granulateur (non représenté) adapté à la granulométrie souhaitée pour le produit final.

Le carbonate de calcium sort du filtre 22 par une ligne 25, sous forme d'une boue dont la teneur en eau peut ensuite être ajustée par un apport issu de la ligne 26. Cet apport final permet le stockage, le contrôle du débit, le transport dans la ligne 3-b et ensuite la réinjection dans la chambre de désulfuration et de dénitrification 1-b de l'absorbant régénéré dans les meilleures conditions.

Afin de mieux comprendre l'objet de la présente demande, le procédé préférentiellement mis en oeuvre dans l'installation ci-dessus mentionnée va maintenant être décrit.

D'une façon générale, le procédé selon l'invention comporte une étape de désulfuration et de dénitrification des fumées réalisées à l'intérieur même du générateur thermique 1, ladite étape se déroulant de préférence dans une zone 1-b sans tube ou autre interne spécialement prévu à cet effet. Pour la capture des oxydes de soufre, on utilise notamment l'absorbant régénéré tandis que pour la réduction des oxydes d'azote, on pulvérise dans les fumées de combustion une solution à forte concentration d'ammoniaque. On met ainsi à profit le fait qu'il existe déjà sur le site un stockage d'ammoniaque pour la dénitrification des fumées.

Une étape de dépoussiérage final, au cours de laquelle on récupère la quasi-totalité de l'absorbant est en outre réalisée en sortie du générateur thermique 1. Ce dépoussiérage est réalisé avec des moyens 6 connus de l'homme de l'art, comme un électrofiltre par exemple.

En sortie du dépoussiéreur 6, une partie de l'absorbant usé est directement recyclée via la ligne 3-a dans le générateur thermique 1 sans traitement particulier, afin d'accroître le rendement de désulfuration des fumées et le taux d'utilisation de l'absorbant (ou, en d'autres termes, le taux de sulfatation de l'absorbant). L'autre partie de l'absorbant usé est dirigée vers l'unité de régénération 17 via la ligne 20.

La première étape de la régénération consiste en la préparation d'une solution de carbonate d'ammonium selon le schéma réactionnel suivant :

$$2\ NH_4OH + CO_2 \rightarrow (NH_4)_2CO_3 + H_2O$$

Pour réaliser cette préparation, on peut employer l'ammoniaque destinée à la dénitrification des fumées ou tout autre source d'ammoniac ou d'ammoniaque. Pour l'apport de gaz carbonique, une source possible peut être constituée par les fumées issues du régénérateur. La ligne 12 permet un tel prélèvement en sortie du dépoussiéreur 6. Ces fumées peuvent être enrichies en $CO_2$ par des moyens 14 de séparation des gaz connus tels que les membranes par exemple, ou par des générateurs à gaz riches en $CO_2$.

Ladite préparation étant exothermique, l'étape comporte aussi préférentiellement un échange de chaleur avec l'extérieur qui maintient une température suffisamment basse, typiquement entre 40 et 80°C, afin que la réaction puisse aller jusqu'à son terme dans les meilleurs délais. L'échangeur de chaleur 16 est prévu à cet effet.

L'étape de régénération proprement dite, au cours de laquelle on met en contact l'absorbant usé avec la solution de carbonate d'ammonium est réalisée suivant le schéma réactionnel donné ci-après :

$$CaSO_4 + (NH_4)_2CO_3 \rightarrow CaCO_3 + (NH_4)_2SO_4$$

L'absorbant usé n'est pas constitué d'anhydrite pur puisqu'il renferme une fraction non négligeable de chaux vive, de l'ordre de 30 à 70 % suivant les cas. Il peut être introduit directement dans le réacteur 17-a, ou avoir fait l'objet d'une extinction initiale à l'eau et/ou à la vapeur, afin de convertir la chaux vive en chaux éteinte. Cette étape de régénération comporte aussi un ou des échanges avec l'extérieur pour ajuster la température du milieu. L'échange de chaleur peut être un apport ou une extraction d'énergie, selon la nature de l'absorbant (en particulier son taux de sulfatation) et l'existence ou non d'une étape d'extinction préalable. Les moyens 19 permettent cet échange de chaleur.

La régénération est réalisée de préférence, non pas dans un réacteur seul, mais dans un ensemble de réacteurs successifs 17-a, 17-b..., afin d'obtenir une conversion de l'anhydrite en sulfate d'ammonium la plus complète possible.

Dans chaque réacteur 17-a, 17-b ..., un mélange efficace est réalisé si des moyens de brassage 18 sont présents.

En outre, il n'est pas exclu d'apporter des compléments de la solution de carbonate d'ammonium ou gaz carbonique ou de tout autre composé en différents points dudit ensemble de réacteurs successifs, qui favoriseraient la réaction.

Le mélange issu de l'étape de régénération (via la ligne 23) est ensuite filtré dans le filtre 22, afin de récupérer le carbonate de calcium et la chaux éteinte. Cette étape de filtration peut être réalisée par exemple avec une contre-circulation d'eau, qui a pour objet de limiter la concentration résiduelle en sulfate d'ammonium dans l'absorbant qui doit être réinjecté via la ligne 25 puis la ligne 3b, dans la chambre 1-b de désulfuration et de dénitrification du générateur thermique.

Avant son réemploi dans le générateur thermique 1, l'absorbant régénéré sera soumis de préférence à un traitement additionnel qui, dans le cas d'une utilisation sous forme sèche consistera par exemple en une étape de séchage du produit, ou qui, dans le cas d'une utilisation sous forme de suspension consistera en un ajustement de la teneur en eau du milieu et en l'ajout d'éventuels agents de stabilisation de ladite suspension.

La ligne 26 sur la figure annexée symbolise l'apport en eau.

Enfin, la solution riche en sulfate d'ammonium issue de l'étape de filtration est ensuite dirigée via la ligne 24 vers des moyens connus qui permettent d'aboutir à un produit solide qui peut être employé comme fertilisant seul ou incorporé dans des formulations d'engrais plus complexes.

Par l'obtention d'une telle solution, la présente invention offre des avantages économiques non négligeables. En effet, selon une filière connue, la régénération d'absorbant usé libère le soufre sous forme de $SO_2$ et $H_2S$ concentrés. Ces espèces chimiques doivent être ensuite envoyées dans des unités spécifiques (par exemple des unités Claus) pour être converties en soufre élémentaire.

La solution finalement obtenue selon l'invention, riche en sulfate d'ammonium, permet une valorisation notamment dans le domaine des engrais, ce qui évite une saturation de la voie soufre traditionnelle.

Bien entendu, diverses améliorations, ajouts peuvent être apportés par l'homme du métier à l'installation et au procédé ci-dessus décrits sans sortir du cadre de la présente invention.

En particulier, si le procédé envisagé s'applique bien à des générateurs de chaleur opérant en lit transporté c'est-à-dire utilisant un absorbant de fine granulométrie grâce au fait que la régénération selon l'invention redonne un absorbant pulvérulent apte à l'obtention de bons rendements de désulfuration, il n'est pas exclu d'appliquer la présente invention à d'autres technologies qui réalisent aussi de la désulfuration in situ, comme les foyers à lits fluidisés dense ou circulant.

## Revendications

**1.** Installation de génération de chaleur comprenant un générateur thermique (1) ayant notamment une zone de désulfuration et de dénitrification (1-b) utilisant un absorbant calcique, un moyen de dépoussiérage (6) des fumées de combustion, une cheminée d'évacuation des effluents issus du moyen (6), un moyen de régénération de l'absorbant usé (17), un moyen de filtrage de l'absorbant régénéré (22), le produit soufré issu dudit moyen (22) de filtrage étant un produit fertilisant, caractérisé en ce que l'installation comporte en outre des moyens (9) de préparation d'une solution destinée à la régénération comprenant un échangeur (9) qui met en contact une solution ammoniacale provenant d'un moyen de stockage (4) via une liaison (10) avec une partie des gaz issus du moyen de dépoussiérage (6) via une liaison (12), et dans lequel est ajouté du gaz carbonique stocké dans un moyen (14) via une liaison (13), la solution ainsi préparée dans ledit moyen (9) étant une solution concentrée en carbonate d'ammonium, et en ce qu'elle comporte en outre un échangeur de chaleur (16) coopérant avec ledit moyen (9).

2. Installation selon la revendication 1, caractérisée en ce que le générateur thermique comprend une chambre de combustion (1-a), une chambre de désulfuration et de dénitrification (1-b), un échangeur par convection (1-c), et en ce que ladite chambre (1-b) comporte des lignes (2, 3-a, 3-b) d'alimentation en absorbant régénéré, en absorbant non régénéré et en ammoniaque issu du moyen de stockage (4).

3. Installation selon l'une des revendications 1 ou 2, caractérisée en ce que les moyens de régénération de l'absorbant consistent en au moins un réacteur (17-a) recevant ladite solution concentrée en carbonate d'ammonium et une partie de l'absorbant calcique usé provenant du dépoussiéreur (6), et en ce que ledit réacteur est équipé de moyens (18) de brassage du mélange.

4. Installation selon la revendication 3, caractérisée en ce que l'un au moins desdits réacteurs comporte en outre un moyen (19) de prélèvement de chaleur.

5. Procédé de génération de chaleur comprenant les étapes consistant à :

- réaliser une combustion dans un générateur thermique,
- désulfurer et dénitrifier les effluents issus de la combustion à l'intérieur dudit générateur,
- utiliser des absorbants calciques,
- réaliser un échange de chaleur avec les effluents traités,
- dépoussiérer les effluents traités,
- récupérer l'absorbant, en recycler une partie vers la zone de désulfuration et dénitrification, en envoyer une autre partie vers une zone de régénération,
- évacuer à l'atmosphère les fumées dépoussiérées,
- régénérer l'absorbant,
- filtrer le mélange issu de ladite régénération, le produit soufré obtenu étant un produit fertilisant,
- recycler l'absorbant régénéré vers la zone de désulfuration et dénitrification,
- évacuer les fumées issues de la régénération,
caractérisé en ce qu'il consiste à :
- préparer, préalablement à l'étape de régénération, une solution concentrée en carbonate d'ammonium à partir d'ammoniaque et de gaz carbonique provenant en partie des fumées issues du générateur thermique et en partie d'une capacité spécifique (14) et réaliser simultanément un échange de chaleur,
- mélanger pendant l'étape de régénération ladite solution avec l'absorbant calcique à régénérer dans au moins un réacteur,
- récupérer d'une part (ligne 25) l'absorbant calcique régénéré avant son recyclage vers la zone de désulfuration/dénitrification et d'autre part (ligne 24) une solution de sulfate d'ammonium.

6. Procédé selon la revendication 5, caractérisé en ce qu'il consiste en outre à réaliser un échange de chaleur simultanément à la régénération d'absorbant.

7. Procédé selon la revendication 5, caractérisé en ce que ladite préparation est réalisée à une température comprise entre 40°C et 80°C.

8. Procédé selon l'une des revendications 5 à 7, caractérisé en ce que la régénération est réalisée successivement dans plusieurs réacteurs (17-a, 17-b, ...).

9. Procédé selon la revendication 8, caractérisé en ce que l'on réalise des apports complémentaires de carbonate de calcium et/ou de gaz carbonique au niveau des différents réacteurs.

10. Procédé selon l'une des revendications 5 à 9, caractérisé en ce que l'étape de filtration est réalisée avec une contre-circulation d'eau.

11. Procédé selon l'une des revendications 5 à 10, caractérisé en ce qu'après récupération et avant recyclage, l'absorbant régénéré est soumis à un traitement additionnel.

12. Procédé selon la revendication 11, caractérisé en ce que le traitement additionnel consiste en un séchage.

**13.** Procédé selon la revendication 11, caractérisé en ce que le traitement additionnel consiste en un ajustement de la teneur en eau et/ou en l'ajout additionnel d'agents stabilisants.

**Claims**

**1.** Installation for generation of heat comprising a thermal generator (1) having notably a desulphurization and denitrification zone (1-b) using a calcic absorbent, a means (6) for separation of the dust from the combustion fumes, a chimney for discharge of the effluents from the means (6), a means for regeneration of the used absorbent (17), a means for filtering the regenerated absorbent (22), the sulphur product from said filtering means (22) being a fertiliser, characterised in that the installation additionally comprises means (9) for preparation of a solution intended for regeneration comprising an exchanger (9) which brings an ammonia solution coming from a storage means (4) via a connection (10) into contact with a portion of the gases coming from the dust separation means (6) via a connection (12), and in which is added carbon dioxide stored in a means (14) via a connection (13), the solution thus prepared in said means (9) being a concentrated solution of ammonium carbonate, and in that it additionally comprises a heat exchanger (16) co-operating with said means (9).

**2.** Installation according to claim 1, characterised in that the thermal generator comprises a combustion chamber (1-a), a desulphurization and denitrification chamber (1-b), a convection exchanger (1-c), and in that said chamber (1-b) has lines (2, 3-a, 3-b) for supplying regenerated absorbent, unregenerated absorbent and ammonia coming from the storage means (4).

**3.** Installation according to one of claims 1 or 2, characterised in that the means for regeneration of the absorbent consist of at least one reactor (17-a) receiving said concentrated solution of ammonium carbonate and a portion of the used calcic absorbent coming from the dust separator (6), and in that said reactor is equipped with means (18) for stirring the mixture.

**4.** Installation according to claim 3, characterised in that at least one of said reactors additionally has a means (19) for extraction of heat.

**5.** Process for generation of heat comprising the steps consisting of:

- effecting combustion in a thermal generator,
- desuiphurizing and denitrifying the effluents coming from the combustion inside said generator,
- using calcic absorbents,
- effecting an exchange of heat with the treated effluents,
- extracting the dust from the treated effluents,
- recovering the absorbent, recycling a portion hereof to the desulphurization and denitrification zone, sending another portion hereof to a regeneration zone,
- discharging the fumes cleaned of dust to the atmosphere,
- regenerating the absorbent,
- filtering the mixture coming from said regeneration, the sulphur product obtained being a fertiliser,
- recycling the regenerated absorbent to the desulphurization and denitrification zone,
- discharging the fumes coming from the regeneration,
  characterised in that it consists of:
- preparing, prior to the regeneration step, a concentrated solution of ammonium carbonate from ammonia and carbon dioxide coming partly from the fumes coming from the thermal generator and partly from a specific capacity (14) and simultaneously effecting an exchange of heat,
- mixing during the regeneration step said solution with the calcic absorbent to be regenerated in at least one reactor,
- recovering firstly (line 25) the regenerated calcic absorbent before it is recycled to the desulphurization/denitrification zone and secondly (line 24) a solution of ammonium sulphate.

**6.** Process according to claim 5, characterised in that it consists additionally of effecting an exchange of heat simultaneously with the regeneration of absorbent.

**7.** Process according to claim 5, characterised in that said preparation is effected at a temperature lying between 40°C and 80°C.

8. Process according to one of claims 5 to 7, characterised in that the regeneration is effected successively in a plurality of reactors (17-a, 17-b, ...).

9. Process according to claim 8, characterised in that additional amounts of calcium carbonate and/or carbon dioxide are added at the different reactors.

10. Process according to one of claims 5 to 9, characterised in that the filtration step is effected with a counter flow of water.

11. Process according to one of claims 5 to 10, characterised in that after recovery and before recycling, the regenerated absorbent is subjected to an additional treatment.

12. Process according to claim 11, characterised in that the additional treatment consists of drying.

13. Process according to claim 11, characterised in that the additional treatment consists of adjustment of the water content and/or the addition of stabilising agents.

**Patentansprüche**

1. Vorrichtung zur Wärmeerzeugung, umfassend: einen Wärmeerzeuger (1), der insbesondere über eine Desulfurierungs- und Denitrifizierungszone (1-b) unter Verwendung eines kalkhaltigen Absorptionsmittels verfügt, ein Entstaubungsmittel (6) für die Verbrennungsrauchgase, einen Abzugskamin für die aus dem Mittel (6) stammenden Abströme, ein Regenerierungsmittel für das verbrauchte Absorptionsmittel (17), ein Mittel zum Filtrieren des regenerierten Absorptionsmittels (22), wobei das schwefelhaltige, aus diesem Filtriermittel (22) stammende Produkt ein Düngemittelprodukt ist, dadurch gekennzeichnet, daß die Vorrichtung des weiteren Mittel (9) zur Herstellung einer zur Regenerierung bestimmten Lösung umfaßt, die einen Austauscher (9) aufweist, der eine ammoniakalische Lösung, die aus einem Speichermittel Lösung (4) stammt, über eine Verbindung (10) mit einem Teil der Gase kontaktiert, die aus dem Entstaubungsmittel (6) über eine Verbindung (12) kommen, und bei dem in einem Mittel (14) gelagertes Kohlendioxid über eine Verbindung (13) zugegeben wird, wobei die in diesem Mittel (9) so hergestellte Lösung eine konzentrierte Lösung aus Ammoniumkarbonat ist und, daß sie im übrigen einen Wärmeaustauscher (16), der mit diesem Mittel (9) zusammenwirkt, umfaßt.

2. Vorrichtung nach Anspruch 1, dadurch gekennzeichnet, daß der Wärmeerzeuger eine Brennkammer (1-a), eine Desulfurierungs- und eine Denitrifizierungskammer (1-b) und einen Konvektionsaustauscher (1-c) umfaßt, und daß diese Kammer (1-b) Leitungen (2, 3-a, 3-b) zur Speisung mit regeneriertem Absorptionsmittel, mit nicht regeneriertem Absorptionsmittel und mit aus dem Speichermittel (4) stammendem Ammoniak umfaßt.

3. Vorrichtung nach einem der Ansprüche 1 oder 2, dadurch gekennzeichnet, daß die Regenerierungsmittel für das Absorptionsmittel aus wenigstens einem Reaktor (17-a) bestehen, der diese konzentrierte Lösung aus Ammoniumkarbonat und einem Teil des verbrauchten kalkhaltigen Absorptionsmittels, das aus dem Entstauber (6) kommt aufnimmt, und daß dieser Reaktor mit Mitteln (18) zum Durchrühren dieses Gemisches ausgestattet ist.

4. Vorrichtung nach Anspruch 3, dadurch gekennzeichnet, daß wenigstens einer der Reaktoren im übrigen ein Mittel (19) zur Entnahme von Wärme umfaßt.

5. Verfahren zur Erzeugung von Wärme, die folgenden Stufen umfassend:

   - Realisieren einer Verbrennung in einem Wärmegenerator,
   - Desulfurieren und Denitrifizieren der aus der Verbrennung im Innern dieses Generators stammenden Abströme,
   - Verwenden kalkhaltiger Absorptionsmittel,
   - Herbeiführen eines Wärmeaustausches mit den behandelten Abströmen,
   - Entstauben der behandelten Abströme,
   - Rückgewinnen des Absorptionsmittels, Rezyklieren eines Teils hiervon zur Desulfürierungs- und Denitrifizierungszone, hiervon in einen anderen Teil gegen eine Regenerationszone führen,
   - die entstaubten Rauchgase in die Atmosphäre abführen,
   - Regenerieren des Absorptionsmittels,
   - Filtrieren des aus dieser Regeneration stammenden Gemisches, wobei das schwefelhaltige erhaltene Produkt ein Düngemittel ist,
- Rezyklieren des regenerierten Absorptionsmittels in die Desulfürierungs- und Denitrifizierungszone,
- Abziehen der aus der Regenerierung stammenden Rauchgase,
  dadurch gekennzeichnet, daß es besteht im:
- Herstellen, vor der Regenerierungsstufe, einer konzentrierten Lösung aus Ammoniumkarbonat ausgehend von Ammoniak und Kohlendioxidgas, das zum Teil aus den Rauchgasen, die aus dem Wärmegenerator kommen, und zum Teil aus einem spezifischen Behälter (14) stammt und gleichzeitiges Durchführen eines Wärmeaustausches,
- Mischen, während der Regenerierungsstufe, dieser Lösung mit dem kalkhaltigen zu regenerierenden Absorptionsmittel in wenigstens einem Reaktor, und,
- Gewinnen einerseits (Leitung 25) des regenerierten kalkhaltigen Absorptionsmittels vor seiner Rezyklierung in die Desulfurierungs/ Denitrifizierungszone (Leitung 24) und andererseits einer Lösung aus Ammoniumsulfat.

6. Verfahren nach Anspruch 5, dadurch gekennzeichnet, daß es im übrigen darin besteht, einen Wärmeaustausch gleichzeitig mit der Regenerierung des Absorptionsmittels durchzuführen.

7. Verfahren nach Anspruch 5, dadurch gekennzeichnet, daß diese Herstellung bei einer Temperatur zwischen 40 und 80°C durchgeführt wird

8. Verfahren nach einem der Ansprüche 5 bis 7, dadurch gekennzeichnet, daß die Regenerierung nacheinander in mehreren Reaktoren (17-a, 17-b,...) durchgeführt wird.

9. Verfahren nach Anspruch 8, dadurch gekennzeichnet, daß man komplementäre Zugaben von Kalziumkarbonat- und/oder Kohlendioxidgas in Höhe der verschiedenen Reaktoren realisiert.

10. Verfahren nach einem der Ansprüche 5 bis 9, dadurch gekennzeichnet, daß die Filtrationsstufe mit Wasser im Gegenstrom durchgeführt wird.

11. Verfahren nach einem der Ansprüche 5 bis 10, dadurch gekennzeichnet; daß nach der Rückgewinnung und vor dem Rezyklieren das regenerierte Absorptionsmittel einer zusätzlichen Behandlung unterworfen wird.

12. Verfahren nach Anspruch 11, dadurch gekennzeichnet, daß die zusätzliche Behandlung in einer Trocknung besteht.

13. Verfahren nach Anspruch 11, dadurch gekennzeichnet, daß die zusätzliche Behandlung in einer Einstellung des Wassergehalts und/oder in der zusätzlichen Zugabe von Stabilisierungsmitteln besteht.